(19) Europäisches Patentamt
European Patent Office
Office européen des brevets

(11) **EP 4 574 456 A1**

(12) **EUROPEAN PATENT APPLICATION**

(43) Date of publication:
**25.06.2025 Bulletin 2025/26**

(21) Application number: **24219010.6**

(22) Date of filing: **11.12.2024**

(51) International Patent Classification (IPC):
**B60C 7/14** (2006.01)    **B60C 9/00** (2006.01)
**B60C 7/22** (2006.01)    **B32B 27/12** (2006.01)
**D02G 3/48** (2006.01)    **B60C 9/20** (2006.01)
**B60C 9/22** (2006.01)

(52) Cooperative Patent Classification (CPC):
**B60C 7/146; B32B 27/12; B60C 7/22;
B60C 9/0028; D02G 3/48;** B60C 7/143;
B60C 9/0042; B60C 9/0064; B60C 9/1835;
B60C 2009/2016; B60C 2009/2064;
B60C 2009/2077; B60C 2009/2233;
B60C 2009/2242; B60C 2009/2257

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 US 202318392284**

(71) Applicant: **The Goodyear Tire & Rubber Company
Akron, OH 44316 (US)**

(72) Inventor: **CELIK, Ceyhan
Stow, 44224 (US)**

(74) Representative: **Kutsch, Bernd
Goodyear S.A.
Patent Department
Avenue Gordon Smith
7750 Colmar-Berg (LU)**

(54) **SHEAR BAND WITH OBLONG CORDS FOR NON-PNEUMATIC TIRES**

(57)    A shear band for a non-pneumatic tire is disclosed. The shear band comprises a plurality of oblong cords arranged in parallel layers, each of the oblong cords having a cross section defining a greater lateral width than a radial height. The shear band may be used in a non-pneumatic tire comprising a central rim for coupling the tire to a vehicle wheel, a connecting web including a plurality of spokes coupled to the central rim and extending radially outward therefrom. The shear band circumscribes the connecting web and is coupled thereto. Also, a method of manufacturing a shear band for a non-pneumatic tire is disclosed. The method comprises: pressing a plurality of filaments together to form oblong cords having a cross section defining a greater lateral width than a radial height; heat treating the oblong cords; and installing the oblong cords in a plurality of parallel circumferential layers to form the shear band.

FIG. 1

EP 4 574 456 A1

## Description

### FIELD OF THE INVENTION

The present disclosure relates generally to vehicle tires and, more particularly, to a shear band for non-pneumatic tires with a high compressive stiffness to reduce rolling resistance.

### BACKGROUND OF THE INVENTION

The pneumatic tire has been the solution of choice for vehicular mobility for over a century. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

The purpose of a shear band in a non-pneumatic tire is to transfer the load from contact with the ground through tension in the spokes or connecting web to the central rim, creating a top loading structure. When the shear band deforms, its preferred form of deformation is shear over bending. Non-pneumatic tires typically have a shear band made from rubber materials sandwiched between at least two layers of inextensible belts or membranes. The use of rubber in a shear band may significantly increase the cost, weight and rolling resistance of the non-pneumatic tire.

### SUMMARY OF THE INVENTION

The invention relates to a shear band in accordance with claim 1, to a non-pneumatic tire in accordance with claim 13, and to a method in accordance with claim 14.

Dependent claims refer to preferred embodiments of the invention.

Disclosed is a non-pneumatic tire having a shear band that is constructed to increase a volume of reinforcement materials, which may have little or no hysteresis. The volume of reinforcement materials in a shear band is increased using oblong cords having a greater lateral width than a radial height. In some embodiments, oblong cords may be rectangular in cross section and be closely packed in parallel layers. A thickness of a compound interspacing the oblong cords may be reduced by selecting a compound with a sufficient stiffness. The oblong cords may be provided as monofilaments constructed from a single material, or as multi-filament cords including a plurality of elongated glass, aromatic polyamide (aramid) and/or carbon-fiber filaments embedded in a resin matrix.

Disclosed is also a non-pneumatic tire. The non-pneumatic tire includes a central rim for receiving a vehicle wheel therein or otherwise coupling the tire to a vehicle, a connecting web including a plurality of spokes coupled to the central rim and extending radially outward therefrom and a shear band circumscribing the connecting web and coupled thereto. The shear band includes a plurality of oblong cords arranged in parallel layers, each of the oblong cords having a cross section defining a greater lateral width than a radial height.

### DEFINITIONS

The following definitions are applicable to the present invention.

"Axial" and "axially" means lines or directions that are parallel to the axis of rotation of the tire.

"Circumferential" means lines or directions extending along the perimeter of the surface of the annular tread perpendicular to the axial direction.

"Cord" means one of 1) a plurality of filaments twisted or otherwise joined together to form an elongated strip of material; 2) a single filament (monofilament) with or without a coating; or 3) a narrow strip of material with or without twist and/or coating.

"Equatorial plane (EP)" means a plane perpendicular to an axis of rotation of a tire and passing through the center of its tread.

"Inextensible" means that a given layer or reinforcement has an extensional stiffness greater than 172.4 MPa (25 Ksi).

"Lateral" means an axial direction.

"Monofilament" means a cord having only one filament.

"Oblong" means a cross-sectional shape having a greater width relative to its height, or an elongated member with such a cross-section.

"Obround" means a cross-sectional shape having two opposed semicircles connected by parallel lines tangent to their endpoints.

"Radial" and "radially" means directions radially toward or away from the axis of rotation of the tire.

### BRIEF DESCRIPTION OF THE DRAWINGS

The invention will be described by way of example and with reference to the accompanying drawings in which:

FIG. 1 is a cross-sectional perspective view of an example of a non-pneumatic tire including a shear band constructed with oblong cords in accordance with aspects of the present disclosure.

FIG. 2 is an enlarged, partial cross-sectional view of the shear band of FIG. 1 illustrating the oblong cords interposing reinforced belt layers of the shear band.

FIG. 3A is an enlarged, cross-sectional view of an oblong cord of FIG. 2.

FIGS 3B-3G are cross-sectional views of alternate embodiments of oblong cords.

FIG. 4 is a partial, cross-sectional view of an alternate embodiment of a shear band including one or more layers of SED cord belts radially inward of a layer of oblong cords.

FIG. 5 is a partial, cross-sectional view of an alternate embodiment of a shear band including one or more overlays disposed over lateral edges of the shear band.

FIG. 6 is a schematic view of a manufacturing implement for forming the oblong filaments.

FIG. 7 is a flowchart illustrating a method of manufacture for a tire assembly in accordance with aspects of the present disclosure.

## DETAILED DESCRIPTION OF PREFERRED EMBODIMENTS OF THE INVENTION

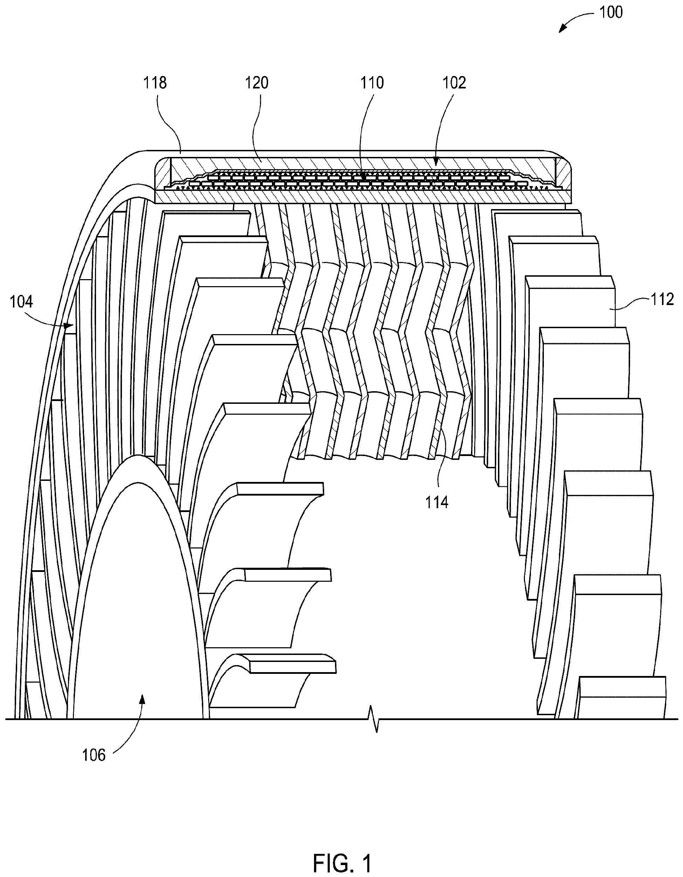

Referring to FIG. 1, a non-pneumatic tire 100 in accordance with the present disclosure is illustrated. The non-pneumatic tire 100 generally includes a shear band 102, a connecting web 104 and a central rim 106, and may be designed as a top loading structure, so that the shear band 102 and the connecting web 104 efficiently carry the operational loads. As described in greater detail below, the shear band 102 is constructed with a plurality of oblong cords 110 that reinforce the shear band 102 and thereby reduce a rolling resistance of the non-pneumatic tire 100. Preferably, the ratio of width to height of the oblong cords 110 is at least 1.1 or at least 1.3 or at least 1.5 or at least 2.

The central rim 106 may be of any suitable design and material for receiving a wheel of a vehicle therein, or otherwise coupling the non-pneumatic tire 100 to a vehicle. For example, the central rim 106 may be constructed generally as a cylindrical component formed from rubber, plastic or carbon fibers. The cylindrical rim 106 may define a central axis of rotation (not shown) for the non-pneumatic tire 100. The connecting web 104 is disposed radially outward of the central rim 106 and may include a plurality of spokes 112 that extend radially outward from the central rim to the shear band 102. As illustrated, the connecting web 104 includes two sets of circumferentially aligned spokes 112 at lateral ends of the non-pneumatic tire 100. The spokes 112 may be curved or straight, and may have different cross-sectional designs than the generally rectangular spokes 112 illustrated. In some embodiments, the connecting web 104 may also include a connecting ring 114 extending axially between the spokes 112. The connecting ring 114 may be provided to stiffen the non-pneumatic tire 100 in a radial direction, and may be constructed of a fabric lattice or other structure. In other embodiments, the connecting ring 114 may be omitted. The connecting web 104 (including the spokes 112) may be formed of an elastic material such as a rubber or a thermoplastic elastomer.

The shear band 102 is an annular structure that is located radially outward of the connecting web 104 and radially inward of a tread portion 118 of the non-pneumatic tire 100. The tread portion 118 may or may not include grooves or other patterns for contacting a road surface. The tread portion118 may include elements such as ribs, blocks, lugs and sipes to improve a grip or other performance characteristics of the non-pneumatic tire 100. A layer or tread rubber 120 may be adhered to a radially outer surface of the shear band 102.

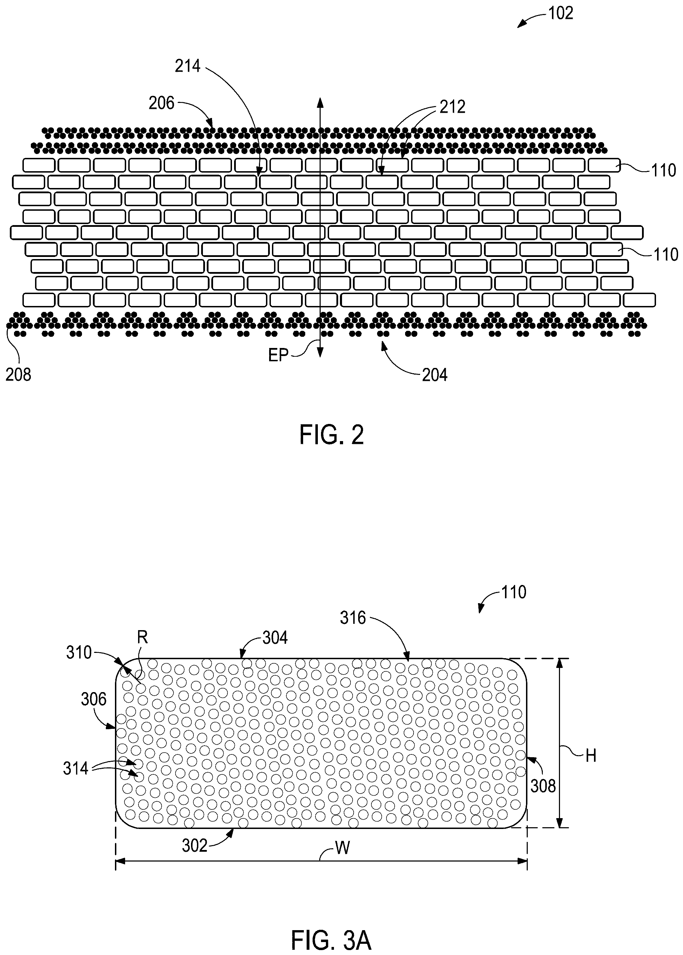

Referring now to FIG. 2, the shear band 102 is illustrated in cross section. The shear band 102 is generally constructed of the oblong cords 110 sandwiched between one or more radially inner belt layers 204 and one or more radially outer belt layers 206. The belt layers 204, 206 may be constructed of elongated steel wire cords 208 embedded in an elastomeric coating. The elongated steel wire cords 208 in the radially inner belt layers 204 may be oriented at a first angle in a range of from 0 to $\pm 10$ degrees, 0 to $\pm 25$ degrees relative to an equatorial plane EP of the non-pneumatic tire 100 (FIG. 1). Similarly, the elongated steel wire cords 208 in the outer belt layers 206 may be oriented at a second angle in the range of 0 to $\pm 10$ degrees, 0 to $\pm 25$ degrees and/or -20 to 30 degrees relative to the equatorial plane EP. In some embodiments, the first angle and the second angle extend in opposite directions, and in other embodiments, the first and second angles extend in the same direction. Although the first and second belt layers 204, 206 are described as being constructed with elongated steel wire cords 208, in other embodiments, other types of inextensible reinforcement cords may substituted for the elongated steel wire cords 208 without departing from the scope of the disclosure.

The oblong cords 110 are arranged in a plurality of parallel layers 212. The parallel layers 212 allow for the oblong cords 110 to be closely packed, thereby providing a relatively large volume of reinforcement materials to the shear band 102. As illustrated in FIG. 2, the oblong cords 110 in each of the parallel layers 212 are laterally staggered from the oblong cords 110 in adjacent layers 212. This arrangement may provide a relatively stiff shear band 102. In other embodiments, the oblong cords 110 may be arranged in parallel radial columns (not shown) as well as in parallel layers 212. An elastomeric compound 214 may be provided interspacing the oblong cords 110. The elastomeric compound 214 may be formed from a mix of various ingredients selected to provide a desired stiffness or other characteristics to the shear band 102. In some embodiments, the compound 214 may have a shear modulus or modulus of rigidity G' 1% RPA in the range of from 1.0 MPa to 42 MPa. In some preferred embodiments the modulus of rigidity G' 1% RPA may be in the range of from 0.5 MPa to 15 MPa, and more preferably in the range of from 3 MPa to 7 MPa.

Referring now to FIG. 3A, one example embodiment of an oblong cord 110 is illustrated with a substantially rectangular cross section. The oblong cord 110 has a lateral width "W" that is greater than a radial height "H." In some preferred embodiments, the width "W" may be in the range of 0.7 mm to 38 mm while the height "H" may be in the range of 0.1 mm to 18 mm. Preferably, the ratio of width to height (W/H) of the oblong cords 110 is at least 1.1 or at least 1.3 or at least 1.5 or at least 2.

The lateral and radial directions are described with respect to the orientation of the oblong cords 110 as arranged in FIG. 2, i.e., with the width "W" parallel to a lateral direction and the height "H" parallel with a radial direction. The larger "W" with respect to the height "H" increases a lateral bending stiffness of the oblong cord 110 and a shear band 102 constructed with the oblong cords 110.

In other embodiments the oblong cords 110 may be arranged in other orientations, such as inclined and/or orthogonal to the orientation illustrated. The oblong cord 110 illustrated in FIG. 3A includes lower and upper walls 302, 304, as well as sidewalls 306, 308 that are substantially flat. Rounded corners 310 are defined at the intersection between the walls 302, 304, 306, 308 such that the oblong cord 110 may be substantially free of sharp corners. The rounded corners 310 may each have a radius "R," which may be less than half of the radial height "H."

As illustrated in FIG. 3A, the oblong cord 110 is a multi-filament cord constructed of a plurality of elongated filaments 314 embedded in a resin matrix 316. The elongated filaments 314 may be constructed of glass, aromatic polyamide and/or carbon fibers, and may comprise greater than 50% of a volume of the oblong cord 110. The resin matrix 316 may include at least one of an epoxy, nylon, polyurethane, polyester, vinyl ester, pheonolic resin and resorcinol/formaldehyde/latex (RFL) resin, and generally binds the elongated filaments 314 to one another. The resin matrix 316 may include a cross-linkable or curable resin, which may be cross-linked or cured by exposure to UV radiation or heat, or by other methods recognized in the art. The resins may be, e.g., an epoxy vinyl ester type, an epoxy bisphenol type, epoxy bisphenol A type and/or a mixture of epoxy vinyl ester type and epoxy bisphenol type resins. In some example embodiments, the oblong cord 110 is constructed of a nylon resin matrix 316 reinforced with glass or carbon filaments 314. In other embodiments, the oblong cord 110 may be constructed as a monofilament of a single material. For example, the oblong cord may exhibit the same cross section as illustrated in FIG. 3A, but may be constructed of a single material such as nylon, polyester, aromatic polyamide or carbon fiber.

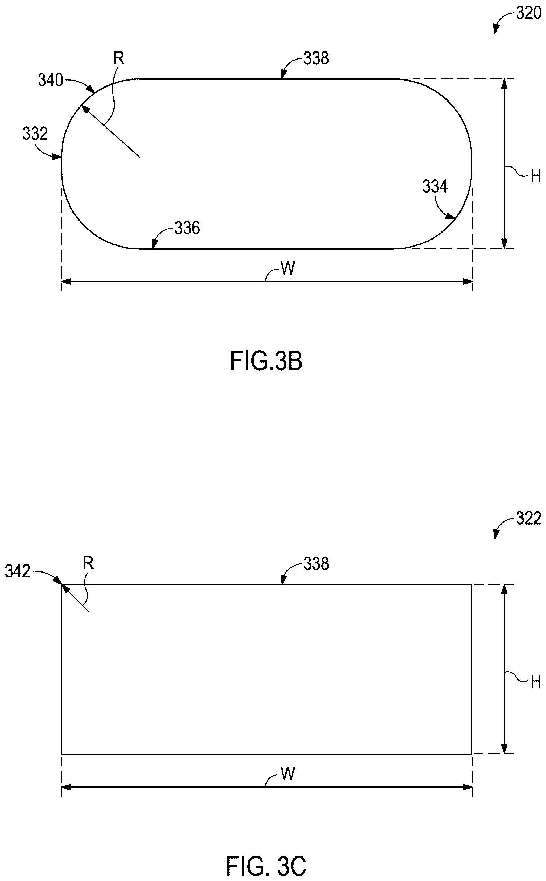

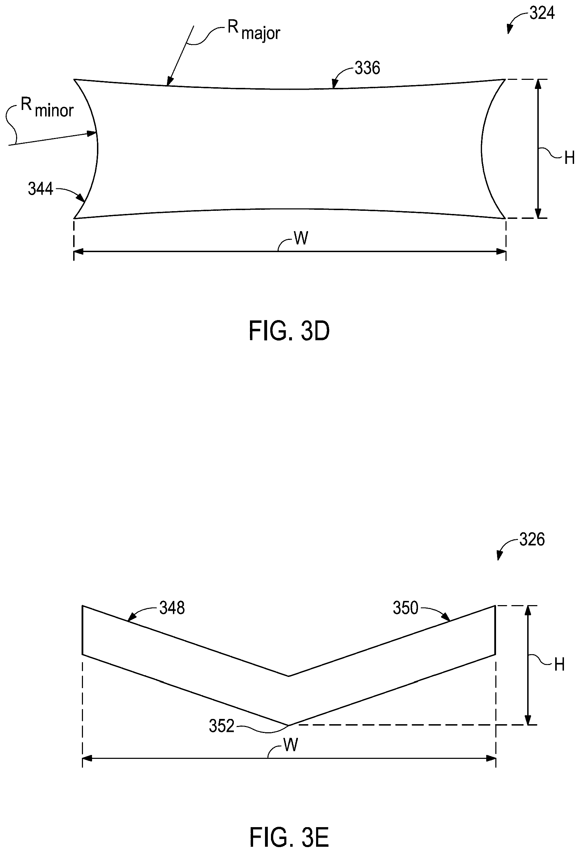

Referring now to FIGS. 3B through 3E, other example embodiments of oblong cords 320, 322, 324 and 326 are illustrated in cross-section, each with a lateral width "W" greater than a radial height "H." The oblong cord 320 illustrated in FIG. 3B has an obround cross-section, which includes has two semicircular sides 332, 334 connected by flat lower and upper parallel sides 336, 338. The semicircular sides 332, 334 are defined by rounded corners 340 having a radius "R" equal to half the radial height "H." The oblong cord 320 may have a width "W" to height "H" ratio in the range of 2 to 5 in some embodiments. The oblong cord 322 (FIG. 3C) may have a standard rectangular cross-section with sharp corners 342, e.g., corners having a radius "R" equal to zero. The oblong cord 324 (FIG. 3D) may have concave sides 344 and 346. The concave sides 344 that extend across the radial height "H" may have a relatively small minor radius $R_{minor}$ and the concave sides 346 that extend across the lateral width "W" may a relatively large major radius $R_{major}$. The minor and major radii $R_{minor}$ and $R_{major}$ may be considered "negative" since centers of the radii $R_{minor}$ and $R_{major}$ are disposed exterior to the cross section and define concave portions of the oblong cord 324. The oblong cord 326 may have an irregular cross-section, such as the chevron shaped cross-section illustrated. The chevron-shaped cross section includes two arms 348, 350 extending from a vertex 352 in opposed directions. The chevron-shaped cross-section may allow oblong cords 326 to interlock with one another when arranged in parallel layers.

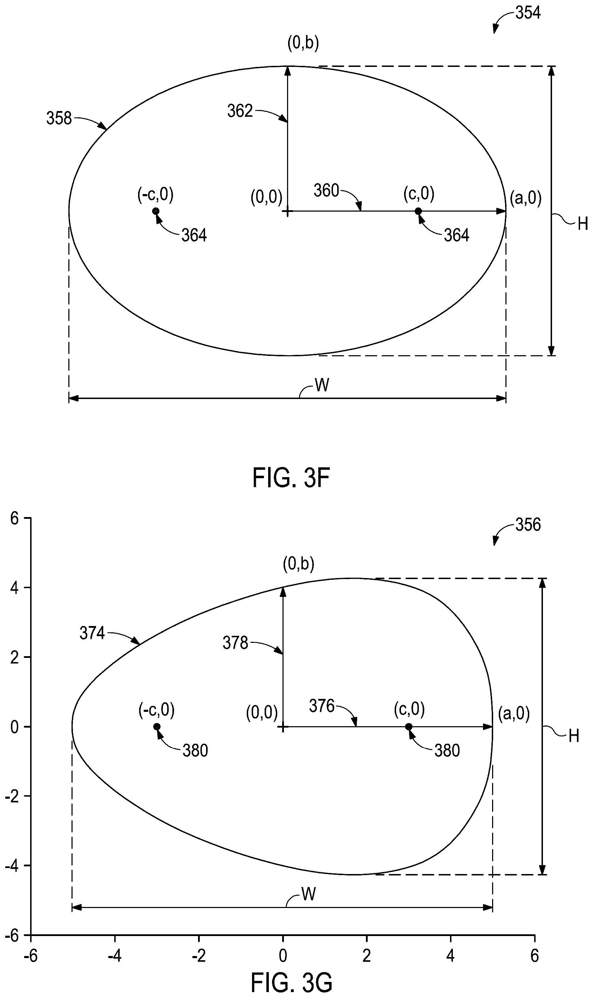

Referring now to FIGS. 3F and 3G, still other example embodiments of oblong cords 354 and 356 are illustrated, both with a greater lateral width "W" than a radial height "H." The oblong cord 354 (FIG. 3F) may have a substantially elliptical cross section defining a perimeter 354. The perimeter 358, centered at the origin (0, 0) of a Cartesian coordinate plane, may be expressed by Equation 1 below, where "a" represents a length of a semi-major axis 360, and "b" represents a length of a semi-minor axis 362.

$$\frac{x^2}{a^2} + \frac{y^2}{b^2} = 1 \qquad \text{(Equation 1)}$$

Focal points 364 of the ellipse are located at a distance "c" from the origin (0, 0), and the distance "c" may be calculated using Equation 2 below.

$$c = \sqrt{a^2 - b^2} \qquad \text{(Equation 2)}$$

An eccentricity "e" of the ellipse generally describes how flat or round the shape of the ellipse is. Generally, the more circular the ellipse is, the closer "e" will be to zero (0), and the flatter the ellipse is, the closer "e" will be to one (1). The eccentricity "e" of an ellipse may be calculated with Equation 3 below.

$$e = \frac{c}{a} \qquad \text{(Equation 3)}$$

In some embodiments, the eccentricity "e" of the perimeter 354 may be in the range of 0.6 to 0.9. Lower eccentricities may not allow for packing the oblong cords 354 as closely in a shear band, and higher eccentricities provide more flexible individual cords 354 than necessary.

The oblong cord 356 (FIG. 3G) may have an irregular elliptical (e.g., egg shaped) cross section defining a perimeter 374. The perimeter 374 is centered at the origin (0, 0) of the Cartesian coordinate plane, and may be expressed by Equation 4 below. Again, "a" represents a length of a semi-major axis 376, and "b" represents a length of a semi-minor axis 378 and "t" is a constant much less than "a."

$$\frac{x^2}{a^2} + \frac{y^2}{b^2}\left(\frac{1}{1-tx}\right) = 1 \qquad \text{(Equation 4)}$$

Focal points 380 of the irregular ellipse (e.g., egg shape) are again located at a distance "c" from the origin (0, 0), and the distance "c" may be calculated using Equation 2 above. Similarly, the eccentricity "e" of the irregular ellipse may be calculated with Equation 3 above. In some embodiments, the eccentricity "e" of the perimeter 374 may also be in the range of 0.6 to 0.9.

For the each of the oblong cords 110 (FIG. 3A), 320 (FIG. 3B), 322 (FIG. 3C), 324 (FIG. 3D), 326, (FIG. 3E), 354 (FIG. 3F) and 356 (FIG. 3G), it should be appreciated that variations from these idealized shapes are contemplated, e.g., due to manufacturing tolerances and irregularities, without departing from the scope of the disclosure. Additionally, each of the oblong cords 110, 320, 322, 324, 326, 354, 356 (and any of the other cords described herein) may have a surface finish, from smooth to rough, which may promote adhesion with one another or the compound 214 (FIG. 2). It is also contemplated that the surface finish may cause the cords to vary from the idealized or mathematical shapes described above. Similar to the oblong cords 110 described above, the oblong cords 320, 322, 324, 326, 354, 356 (and any of the other cords described herein) may be constructed either as a monofilament of a single material (e.g., nylon, polyester, glass, aromatic polyamide, carbon fibers), or as a multifilament cord including a plurality of elongated filaments (e.g., glass, aromatic polyamide or carbon fibers) embedded in a resin matrix, twisted together or otherwise adhered to one another in an oblong shape.

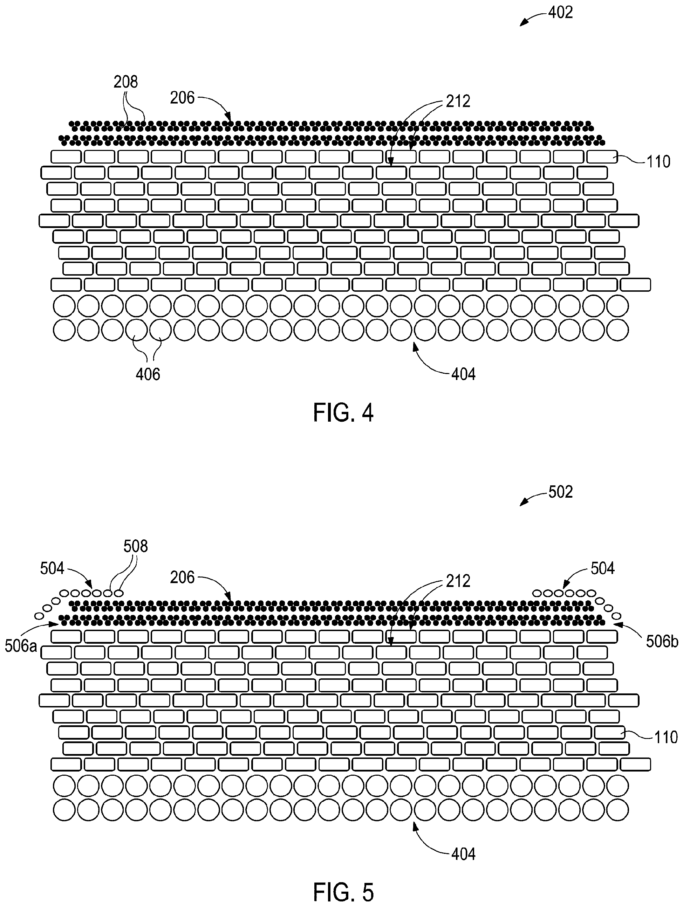

Referring to FIG. 4, an alternate embodiment of a shear band 402 is illustrated including one or more inner belt layers 404 constructed of aromatic polyamide cords 406, or another material that is dissimilar from the outer belt layer(s) 206. The aromatic polyamide cords 406 provide temperature chemical resistance to the shear band 402 or may offer other performance characteristics. For example, aromatic polyamides, such as aramid, may form cords 406 that have high tensile stiffness. Arranging aromatic polyamide cords 406 at the very bottom (near a radially innermost edge) of the shear band 402 provides a maximum benefit of their high tensile stiffness since the radially innermost edge of the shear band 402 is subjected to tensile forces in operation. These cords 406 will reinforce the shear band 402 and resist these tensile forces. In some embodiments, the cords 406 may be constructed of nylon resins. Nylons are aliphatic polyamides, which may shrink when heated, e.g., by operational stresses. The ability of the cords 406 to shrink may provide resistance against growth of the shear band 402 and tires constructed with the shear band 402.

The outer belt layer 206 may be constructed of elongated steel wire cords 208 embedded in an elastomeric coating as described above. The aromatic polyamide cords 406 may be a larger in diameter than the steel wire cords 208, and may be tackified to maintain the aromatic polyamide cords 406 in position as the shear band 402 is constructed. The aromatic polyamide cords 406 (or any of the other cords described herein) may be tackified by various methods recognized in the art such as coating the cord 406 in an aqueous blend of rosin and rubber lattices, or with a solvent solution or emulsion of an un-vulcanized rubber compound. In some embodiments, the aromatic polyamide cords 406 may be inclined in range of -25 degrees to 25 degrees, -10 degrees to 10 degrees, and/or -20 degrees to 30 degrees from an equatorial plane EP (FIG. 2) of the tire.

Between the inner belt layers 404 and the outer belt layers 206, the shear band 402 includes one or more parallel layers 212 of oblong cords 110 as described above. In other embodiments, the oblong cords 110 may be replaced with another one of the oblong cords 320 (FIG. 3B), 322 (FIG. 3C), 324 (FIG. 3D), 326 (FIG. 3E), 354 (FIG. 3F) or 356 (FIG. 3F) described above, or a combination of the oblong cords 110, 320, 322, 324, 326, 354, 356 with one another without departing from the scope of the disclosure.

Referring to FIG. 5, an alternate embodiment of a shear band 502 is illustrated including a pair of end belts 504 overlying lateral edges 506a, 506b of the outer belt layer 206. In some embodiments, the end belts 504 include wire cords 508 or other filaments extending an angle in the range of 0 to ±10 degrees, and in some embodiments in the range of 0 to ±5 degrees relative to the equatorial plane EP (FIG. 2). The end belts 504 may restrict movement of the outer belt layers 206 at the lateral edges 506a, 506b and thereby reduce stress, fatigue and heat generation when the shear band 502 is in use. Reducing stresses may reduce the risk of edge separation of the outer belts 206 from adjacent layers. The shear band 502 may further include one or more parallel layers 212 of oblong cords 110 and one or more inner belt layers 404 as described above.

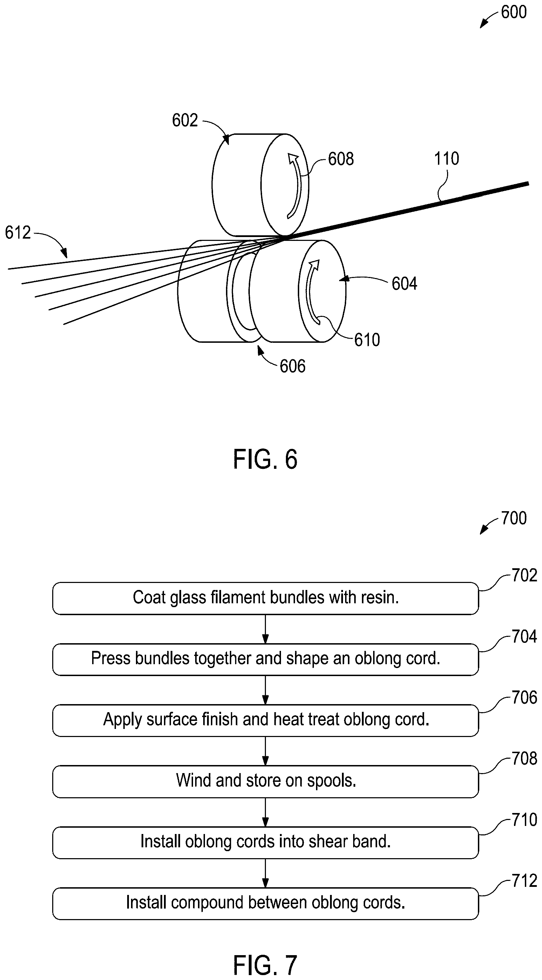

Referring to FIG. 6, a schematic view of an example manufacturing implement 600 for forming the oblong cords 110, 320, 322, 324, 326, 354, 356 is illustrated. The manufacturing implement 600 includes a press roller 602 and a shaping roller 604. The shaping roller 604 may include a circumferential notch 606 defined therein, with a width and depth sized and shaped similarly to the lateral width "W" and radial height "H" of the desired oblong cord. As illustrated in FIG. 6, the circumferential notch 606 is generally rectangular and may be employed to form oblong cords 110. In other embodiments, the circumferential notch 606 may be sized or shaped to form any of the other oblong cords 320, 322, 324, 326, 354, 356 or any of the other multi-filament cords described herein. One or both of the press roller 602 and the shaping roller 604 may include a heater, e.g., a resistive heater (not shown) therein, or in other embodiments, distinct heaters (not shown) may be provided adjacent the rollers 602, 604.

The press roller 602 and the shaping roller 604 engage one another and may be rotated in opposite directions, e.g., in the directions of arrows 608, 610, to feed a plurality of resin coated filament bundles 612 through the circumferential notch 606. The filament bundles 612 may include one or more filaments 314 (FIG. 3), which may include glass filaments, aromatic polyamide filaments and/or carbon fiber filaments as described above. By heating the resin-coated bundles 612 and applying pressure with the rollers 602, 604, an oblong cord 110 may be formed.

In other embodiments, the multifilament oblong cords 110, 320, 322, 324, 326, 354, 356 may be constructed using pultrusion techniques and equipment. Pultrusion is a processing technique of forming and manufacturing a continuous length of fiber-reinforced polymer (FRP) by pulling a mix of reinforced fibers (e.g., glass, aromatic polyamide and/or carbon fibers) and liquid resin through a heated die (not shown). The process results in cords with a constant section, such as pipes, rods, beams, and/or any of the shapes illustrated in FIGS. 3A through 3F. The shape of the heated die along with type of resin matrix may be varied to produce oblong cords 110, 320, 322, 324, 326, 354, 356 with the desired performance characteristics.

Referring now to FIG. 7, an example procedure 700 for manufacturing a tire assembly in accordance with aspects of the present disclosure is illustrated. The procedure 700 begins at step 702 where glass filament bundles are coated with a resin. The bundles may be then be pressed together (step 704) and shaped into an oblong cord. For example, the bundles may be pressed together with a shaping roller or with a die in a pultrusion manufacturing facility. Next, in step 706, a surface finish is applied and the oblong cord is heat treated. It should be appreciated that steps 702, 704 and 706 may be performed sequentially, simultaneously and in different orders than those indicated.

The procedure 700 then proceeds to step 708 where the finished oblong cords are wound on spools for storage or transport. In some embodiments, step 708 may be omitted and the procedure 700 proceeds directly to step 710 where the oblong cords are installed into a shear band of a non-pneumatic tire assembly. The oblong cords may be installed in parallel circumferential layers, and the oblong cords in each layer may be laterally staggered with respect to oblong cords in adjacent layers. A compound may then be installed between the oblong cords in the shear band. The tire assembly may be completed by installing upper and/or lower belts to the shear band, installing a tread and/or by installing the shear band onto a central rim and connecting web.

## Claims

1. A shear band for a non-pneumatic tire, comprising a plurality of oblong cords arranged in parallel layers, each of the oblong cords having a cross section defining a greater lateral width than a radial height.

2. The shear band of claim 1, wherein the oblong cords include at least one of a nylon material and a polyester material; and/or wherein the oblong cords include a plurality of elongated glass, carbon fiber and/or aromatic polyamide filaments embedded in a resin matrix.

3. The shear band of claim 1 or 2, wherein the oblong cords are embedded within an elastomeric compound, the elastomeric compound preferably exhibiting a shear modulus G' 1% RPA in the range of from 0.5 to 15 MPa.

4. The shear band of at least one of the previous claims, further comprising a lower belt layer disposed radially inward of the plurality of oblong cords and an upper belt layer disposed radially outward of the plurality of oblong cords, the lower belt layer preferably comprising at least one of elongated steel wire cords and/or aromatic polyamide cords inclined between ±25 degrees with respect to an equatorial plane of the shear band.

5. The shear band of at least one of the previous claims, wherein each of the oblong cords are multifilament cords comprising a plurality of elongated glass, carbon fiber and/or aromatic polyamide filaments embedded in a resin matrix.

6. The shear band of at least one of the previous claims, wherein the resin matrix includes at least one of an epoxy, nylon, polyurethane, polyester, vinyl ester, pheonolic resin, resorcinol/formaldehyde/latex (RFL) resin.

7. The shear band of at least one of the previous claims, wherein each of the oblong cords are monofilament cords constructed of a nylon or polyester material.

8. The shear band of at least one of the previous claims, wherein the shear band comprises an elastomeric compound interspacing the oblong cords, the elastomeric compound preferably having a shear modulus G' 1% RPA in the range of from 0.5 to 15 MPa.

9. The shear band of at least one of the previous claims, wherein the oblong cords in each of the parallel layers are laterally staggered from the oblong cords in adjacent layers.

10. The shear band of at least one of the previous claims, wherein the shear band comprises at least one inner belt layer disposed radially between the connecting web and the plurality of oblong cords.

11. The shear band of at least one of the previous claims, wherein the at least one inner belt layer includes a plurality of elongated steel wire cords inclined between -25 to 25 degrees with respect to an editorial plane of the non-pneumatic tire; and/or wherein the at least one inner belt layer includes a plurality of aromatic polyamide cords inclined between -25 to 25 degrees with respect to an editorial plane of the non-pneumatic tire.

12. The shear band of at least one of the previous claims, wherein the shear band comprises at least one outer belt layer disposed radially outwardly of the plurality of oblong cords; and/or wherein the shear band further comprises a pair of end belts overlying lateral edges of the outer belt layer.

13. A non-pneumatic tire comprising a central rim for coupling the tire to a vehicle wheel, a connecting web including a plurality of spokes coupled to the central rim and extending radially outward therefrom, and a shear band circumscribing the connecting web and coupled thereto, wherein the shear band is a shear in accordance with at least one of the previous claims.

14. A method of manufacturing a shear band for a non-pneumatic tire, the method comprising:

    pressing a plurality of filaments together to form oblong cords having a cross section defining a greater lateral width than a radial height;
    heat treating the oblong cords; and
    installing the oblong cords in a plurality of parallel circumferential layers to form the shear band.

15. The method of claim 14, further comprising embedding the plurality of oblong cords within an elastomeric compound.

FIG. 1

FIG. 2

FIG. 3A

FIG.3B

FIG. 3C

$R_{major}$

336

324

$R_{minor}$

H

344

W

## FIG. 3D

326

348

350

H

352

W

## FIG. 3E

FIG. 3F

FIG. 3G

FIG. 4

FIG. 5

600

602

608

110

612

604

610

606

FIG. 6

700

| | 702 |
| --- | --- |
| Coat glass filament bundles with resin. | |

| | 704 |
| --- | --- |
| Press bundles together and shape an oblong cord. | |

| | 706 |
| --- | --- |
| Apply surface finish and heat treat oblong cord. | |

| | 708 |
| --- | --- |
| Wind and store on spools. | |

| | 710 |
| --- | --- |
| Install oblong cords into shear band. | |

| | 712 |
| --- | --- |
| Install compound between oblong cords. | |

FIG. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/147398 A1 (BRIDGESTONE AMERICAS TIRE OPERATIONS LLC [US]) 7 July 2022 (2022-07-07) * paragraph [0004] - paragraph [0042]; figures 1-4,6 * | 1-15 | INV. B60C7/14 B60C9/00 B60C7/22 B32B27/12 D02G3/48 |
| X A | KR 2023 0126278 A (HANKOOK TIRE & TECH CO LTD [KR]) 30 August 2023 (2023-08-30) * see the enclosed trnaslation of the description; figures 1-5 * | 1-3,5,6, 8,10-13 4,9,14, 15 | ADD. B60C9/20 B60C9/22 |
| X A | EP 4 108 474 A1 (SUMITOMO RUBBER IND [JP]) 28 December 2022 (2022-12-28) * paragraph [0020] - paragraph [0078]; figures 1-4; tables 1,2 * | 1-3,7-9, 11,12 4-6,10, 13-15 | |
| X A | EP 4 201 702 A1 (SUMITOMO RUBBER IND [JP]) 28 June 2023 (2023-06-28) * paragraph [0013] - paragraph [0082]; figures 1-7; tables 1,2 * | 1,3,8,9, 11,12 2,4-7, 10,13-15 | |
| X A | US 5 082 713 A (GIFFORD JAMES H [US]) 21 January 1992 (1992-01-21) * column 2, line 60 - column 5, line 65; figures 1-3 * | 1-3,7,8, 12 4-6, 9-11, 13-15 | TECHNICAL FIELDS SEARCHED (IPC) B60C B32B D02G |
| X A | EP 3 770 319 A1 (SUMITOMO ELECTRIC TOCHIGI CO LTD [JP] ET AL.) 27 January 2021 (2021-01-27) * paragraph [0005] - paragraph [0181]; figures 1-9; table 1 * | 1,3,8, 14,15 2,4-7, 9-13 | |

-/--

| The present search report has been drawn up for all claims | | |
|---|---|---|
| Place of search **Munich** | Date of completion of the search **11 April 2025** | Examiner **Jung, Wolfgang** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 21 9010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/316998 A1 (RHYNE TIMOTHY BRETT [US] ET AL) 8 October 2020 (2020-10-08) | 1-4, 7-10,12, 13 | |
| A | * paragraph [0034] - paragraph [0080]; figures 1,2,5,6,10-14 * | 5,6,11, 14,15 | |
| | ----- | | |
| X | US 2023/173845 A1 (KING PATRICK F [US] ET AL) 8 June 2023 (2023-06-08) | 1-3,8, 10,12,13 | |
| A | * paragraph [0036] - paragraph [0166]; figures 1-19 * | 4-7,9, 11,14,15 | |
| | ----- | | |
| A | US 2022/041015 A1 (NESBITT ADAM K [US]) 10 February 2022 (2022-02-10) * paragraph [0003] - paragraph [0049]; figures 1-10 * | 1-15 | |
| | ----- | | |

TECHNICAL FIELDS
SEARCHED        (IPC)

The present search report has been drawn up for all claims

| Place of search | Date of completion of the search | Examiner |
|---|---|---|
| Munich | 11 April 2025 | Jung, Wolfgang |

EPO FORM 1503 03.82 (P04C01)

# EP 4 574 456 A1

## ANNEX TO THE EUROPEAN SEARCH REPORT
## ON EUROPEAN PATENT APPLICATION NO.

EP 24 21 9010

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | | | Publication date | Patent family member(s) | | Publication date |
|---|---|---|---|---|---|---|
| WO 2022147398 | A1 | | 07-07-2022 | CN | 116648361 A | 25-08-2023 |
| | | | | EP | 4271574 A1 | 08-11-2023 |
| | | | | JP | 2024501222 A | 11-01-2024 |
| | | | | US | 2024100882 A1 | 28-03-2024 |
| | | | | WO | 2022147398 A1 | 07-07-2022 |
| KR 20230126278 | A | | 30-08-2023 | NONE | | |
| EP 4108474 | A1 | | 28-12-2022 | EP | 4108474 A1 | 28-12-2022 |
| | | | | JP | 2023002263 A | 10-01-2023 |
| EP 4201702 | A1 | | 28-06-2023 | CN | 116330891 A | 27-06-2023 |
| | | | | EP | 4201702 A1 | 28-06-2023 |
| | | | | JP | 2023094366 A | 05-07-2023 |
| US 5082713 | A | | 21-01-1992 | NONE | | |
| EP 3770319 | A1 | | 27-01-2021 | CN | 111886378 A | 03-11-2020 |
| | | | | EP | 3770319 A1 | 27-01-2021 |
| | | | | JP | 7142680 B2 | 27-09-2022 |
| | | | | JP | WO2019181177 A1 | 25-03-2021 |
| | | | | WO | 2019181177 A1 | 26-09-2019 |
| US 2020316998 | A1 | | 08-10-2020 | CN | 111867853 A | 30-10-2020 |
| | | | | EP | 3727887 A1 | 28-10-2020 |
| | | | | US | 2020316998 A1 | 08-10-2020 |
| | | | | US | 2024100883 A1 | 28-03-2024 |
| | | | | WO | 2019125460 A1 | 27-06-2019 |
| | | | | WO | 2019126339 A1 | 27-06-2019 |
| US 2023173845 | A1 | | 08-06-2023 | CN | 115916549 A | 04-04-2023 |
| | | | | EP | 4143038 A1 | 08-03-2023 |
| | | | | US | 2023173845 A1 | 08-06-2023 |
| | | | | WO | 2021222754 A1 | 04-11-2021 |
| US 2022041015 | A1 | | 10-02-2022 | CN | 113226793 A | 06-08-2021 |
| | | | | EP | 3902691 A1 | 03-11-2021 |
| | | | | JP | 7275281 B2 | 17-05-2023 |
| | | | | JP | 2022515815 A | 22-02-2022 |
| | | | | US | 2022041015 A1 | 10-02-2022 |
| | | | | WO | 2020139623 A1 | 02-07-2020 |

EPO FORM P0459

For more details about this annex : see Official Journal of the European Patent Office, No. 12/82